# EUROPEAN PATENT SPECIFICATION

(11) **EP 2 334 945 B1**
(45) Date of publication and mention of the grant of the patent: **25.09.2013**
(21) Application number: 08877183.7
(22) Date of filing: 17.12.2008
(51) Int. Cl.: F16D 65/12

(54) **METHOD FOR MANUFACTURING OF CERAMIC BRAKE DISK ROTOR WITH INTERNAL COOLING CHANNEL**
VERFAHREN ZUR HERSTELLUNG EINES KERAMISCHEN BREMSSCHEIBENROTORS MIT INNEREM KÜHLKANAL
PROCÉDÉ DE FABRICATION DE ROTOR DE DISQUE DE FREIN EN CÉRAMIQUE AVEC CANAL DE REFROIDISSEMENT INTERNE

(30) Priority: 30.09.2008 KR 20080095934
(43) Date of publication of application: 22.06.2011
(73) Proprietor: DACC Co. Ltd., Changwon-si Gyeongsangnamdo 641-120 (KR)
(72) Inventor: IM, Dong Won, Gimhae-si Gyeongsangnam-do 621-800 (KR); CHOI, Yeon Ho, Tongyeong-si Gyeongsangnam-do 650-090 (KR); LEE, Jun Sang, Seoul 135-080 (KR); KANG, Jeong Seok, Jeonju-si Jeonbuk 561-757 (KR); SHIN, Hyun Kyu, Changwon-si Gyeongsangnam-do 641-936 (KR)
(74) Representative: Grünecker, Kinkeldey, Stockmair & Schwanhäusser
(86) International application number: PCT/KR2008/007456
(87) International publication number: WO 2010/038924

(56) References cited:
- GB-A- 2 228 053
- JP-A- 8 226 475
- JP-A- 59 062 738
- US-A1- 2008 035 437
- US-A1- 2008 135 359
- US-A1- 2008 164 110
- US-B1- 6 386 341
- US-B1- 6 505 716
- US-B2- 6 797 094

## Description

### Technical Field

The present invention relates to a method of manufacturing a ceramic brake disk rotor having internal cooling channels, and more particularly, to a method of more precisely and easily realizing cooling channels constituting a ceramic brake disk rotor.

### Background Art

In general, brake systems are mostly foot brakes in a manner that are actuated by foot control through a driver, as a device for slowing down or stopping a car while driving, and the actuating force of the driver, i.e., pedal force is converted to the braking force of a wheel through the medium of hydraulic or pneumatic pressure. Of such hydraulic brakes, disk brake is mounted with a cylindrical disk rotor that is rotating along with the wheel instead of a drum to push brake pads operated by a hydraulic piston against both outer surfaces of the disk rotor, thereby braking wheels by the frictional force.

The structure of the disk brake includes a disk rotor, a caliper, disk pads, and the like.

FIG. 1 is a perspective view illustrating a structure of a disk rotor according to US 2008/0035437 A1. As illustrated in FIG. 1, a convention disk rotor 1 performs a process of converting kinetic energy to thermal energy at the time of braking, and therefore is formed with cooling channels 10 for cooling thermal energy up to several hundred degrees at the time of braking. Furthermore, the cooling channels 10 have a shape in which the channels penetrating from the outer circumference of the disk rotor 1 to the inner circumference are formed at regular intervals along to the direction of the circumference.

FIG. 2 is a view for explaining a method of manufacturing a conventional disk rotor, for example, US 6,386,341 B1. With reference to FIG. 2, see for example, in the prior art when manufacturing a disk rotor using a carbon-carbon composite, the disk rotor is manufactured by any one of the following three processes.

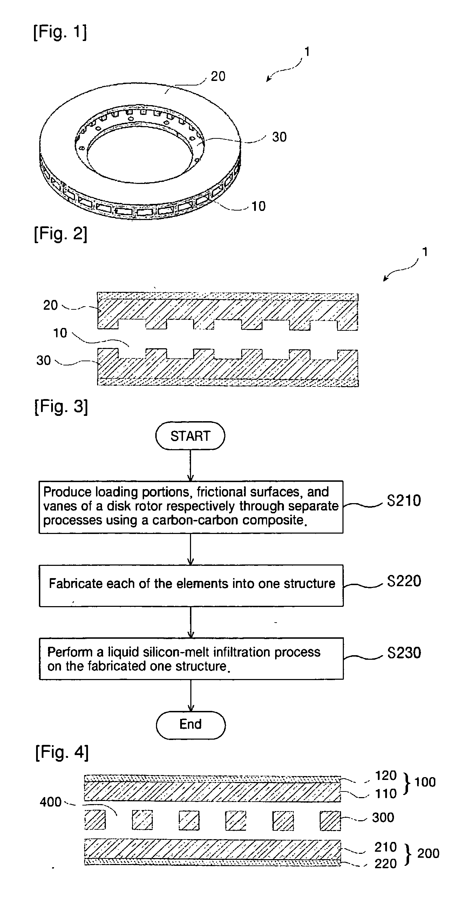

A first method of manufacturing a conventional disk rotor, in the step of forming a carbon-carbon composite of the disk rotor as illustrated in FIG. 2, a ceramic brake disk rotor as an integrated body is manufactured by respectively producing an upper plate 20 and a lower plate 30 in an upper/lower symmetrical manner (at this time, a half shape for forming a shape of cooling channels 10 is formed at each of the upper plate 20 and the lower plate 30) and then forming an assembly by a combining process (at this time, a shape of the cooling channels IO is form by combining the upper plate 20 and the lower plate 30), and performing a liquid silicon-melt infiltration process.

However, in order to form the cooling channels 10, the upper plate 20 and lower plate 30 produced in this way should be fabricated in a correct position for forming the cooling channels 10 in the upper plate 20 and lower plate 30, and especially highly strict processing tolerances are required at a surface having cooling channels 10 not to create a gap on the fabricated boundary surface. This processing characteristic functions as a main reason for increasing machine processing cost and time in the step of forming a carbon-carbon composite of the disk rotor.

A second method of manufacturing a conventional disk rotor, in the step of producing a carbon fiber-reinforced polymer (hereinafter, CFRP) of the disk rotor, it is used a manufacturing method in which a process for forming an upper plate and a lower plate in such an upper/lower symmetrical manner is omitted in the step of forming a carbon-carbon composite of the disk rotor by respectively producing the upper plate 20 and the lower plate 30 in an upper/lower symmetrical manner as illustrated in FIG. 2 (also at this time, a half shape for forming the cooling channels 10 is formed at each of the upper plate 20 and the lower plate 30).

However, a warp or dimensional change is also created during a thermal treatment process step by such a method, and additional processes are required, thereby having a problem similar to the first method.

A third method of manufacturing a conventional disk rotor, as a recent processing technology by which the second method is enhanced, is a method in which a material having an internal cooling channel shape is additionally inserted during a press molding process, and then incinerated during a thermal treatment process for producing a carbon-carbon composite of the disk rotor. Specifically, such a third method is a simultaneous molding method in which a raw material capable of press molding is produced, and a raw material applicable to the upper plate 20 is filled into the press mold, and a material having a shape of the cooling channels 10 is charged, and then a raw material applicable to the lower plate 30 is filled into the press mold. This method is evaluated as a relatively effective manufacturing method because an accurate shape and dimension can be satisfied even with a minimal machining processing after a thermal treatment process for producing a carbon-carbon composite of the disk rotor.

However, such a method also has a disadvantage that the selection of a material having a shape of the cooling channels 10 is very restrictive. Specifically, during a molding process of the disk rotor 1 by such a method, a low-density region is easily created in a vane 40 shaped portion, and therefore, to remove such a problem, a material having a shape of the cooling channels 10 should also be contracted as much as a contraction ratio of the raw material applicable to the upper plate 20 or the lower plate 30 during the molding process, and this contraction phenomenon should be made only in a thickness direction.
US 2008/0164110 A1 discloses a break disk ring with perforation holes perpendicular to the plane of friction surfaces. The perforation holes each have a distance from the nearest neighbours which is always at most 30mm and on average it is at least twice the average hole diameter.

### Disclosure of Invention

### Technical Problem

The present invention is devised to solve such a conventional problem, and it is an object of the invention to produce an upper plate, a lower plate, and vanes of a disk rotor using separate processes respectively, and then fabricating these elements, thereby precisely and easily realizing cooling channels using a liquid silicon-melt infiltration process.

### Technical Solution

In order to achieve such an object of the invention, a method of manufacturing a ceramic brake disk rotor having internal cooling channels according to the present invention, includes the steps of (a) producing loading portions, frictional surfaces, and vanes of thedisk rotor respectively through separate processes using a carbon fiber reinforced carbon-carbon composite;(b) fabricating the loading portions, frictional surfaces, and vanes respectively produced through separate processes into one structure and (c) performing a liquid silicon-melt infiltration process on the fabricated one structure.

According to a preferred embodiment, the carbon-carbon composite in the step (a) may be formed by a process including the steps of (al) producing a carbon fiber- reinforced polymer (CFRP) that is reinforced by carbon fiber; and (a2) producing a carbon-carbon composite by performing a high thermal treatment or densification on the carbon fiber-reinforced polymer.

According to a preferred embodiment, the loading portions, the vanes, and the frictional surfaces may be formed by a carbon-carbon composite having a same composition ratio.

According to a preferred embodiment, the loading portions and the vanes may be formed by a carbon-carbon composite having a same composition ratio, and the frictional surfaces may be formed by a carbon-carbon composite having a different composition ratio from the loading portions and the vanes.

According to a preferred embodiment, when the loading portions, the vanes, and the frictional surfaces are formed with a carbon-carbon composite having a same composition ratio, carbon fiber having a length greater than 1 mm may be applied to the loading portions, the vanes, and the frictional surfaces as a reinforced material, and the loading portions, the vanes, and the frictional surfaces after performing the liquid silicon-melt infiltration process may be synthesized with a composition ratio containing 30-70 wt% of C- component, 2-15 wt% of Si-component, and 35-65 wt% of SiC-component.

According to a preferred embodiment, when the loading portions and the vanes are formed with a carbon-carbon composite having a same composition ratio, and the frictional surfaces are formed with a carbon-carbon composite having a different composition ratio from the loading portions and the vanes, carbon fiber having a length greater than 1 mm may be applied to a carbon- carbon composite for the loading portions and the vanes as a reinforced material, and carbon fiber having a length less than 1 mm may be applied to a carbon- carbon composite for the frictional surfaces as a reinforced material, and the frictional surfaces after performing the liquid silicon-melt infiltration process may be synthesized with a composition ratio containing 55-99 wt% of SiC-component and 1-45 wt% of C-component, and the loading portions and the vanes after performing the liquid silicon-melt infiltration process may be synthesized with a composition ratio containing 30-70 wt% of C-component, 2-15 wt% of Si-component, and 35-65 wt% of SiC-component.

According to a preferred embodiment, the shape of the vanes may be produced by any one of a spiral shape, a linear shape, and a pin shape.

### Advantageous Effects

According to a method of manufacturing a ceramic brake disk rotor according to the present invention, it is possible to realize a shape of cooling channels more economically and easily.

Furthermore, according to a method of manufacturing a ceramic brake disk rotor according to the present invention, the dimensional precision of cooling channels is enhanced, thereby having an effect of improving the performance of a disk rotor.

### Brief Description of the Drawings

FIG. 1 is a perspective view illustrating a structure of a conventional disk rotor.
FIG. 2 is a view for explaining a method of manufacturing a conventional disk rotor.
FIG. 3 is a flowchart for explaining a method of manufacturing a ceramic brake disk rotor having internal cooling channels according to a first embodiment of the present invention.
FIG. 4 is a view illustrating each elementapplied to a method of manufacturing a disk rotor of the present invention.
FIG. 5 is an exemplary view of vane shapes applicable to a method of manufacturing a disk rotor of the present invention.
FIGS. 6 and 7 are views for explaining each process of fabricating loading portions, vanes, and frictional surfaces applied to a method of manufacturing a disk rotor of the present invention.
FIG. 8 is a cross-sectional view illustrating a state in which grooved portions for inserting vanes between a lower loading portion and an upper loading portion are formed.
FIG. 9 is a flowchart for explaining a method of manufacturing a ceramic brake disk rotor having internal cooling channels according to a second embodiment of the present invention.

### Best Mode for Carrying Out the Invention

Hereinafter, preferred embodiments of the present invention will be described in detail with reference to the accompanying drawings.

### [First Embodiment]

FIG. 3 is a flowchart for explaining a method of manufacturing a ceramic brake disk rotor having internal cooling channels according to a first embodiment of the present invention, and FIG. 4 is a view illustrating each element applied to a method of manufacturing a disk rotor of the present invention.

Referring to FIGS. 3 and 4, a method of manufacturing a ceramic brake disk rotor having internal cooling channels according to the present invention, includes a step S210 of producing loading portions 110, 210, frictional surfaces 120, 220, and vanes 300 of the disk rotor respectively through separate processes using a carbon fiber reinforced carbon-carbon composite, a step S220 of fabricating the loading portions 110, 210, frictional surfaces 120, 220, and vanes 300 respectively produced through separate processes into one structure, and a step S230 of performing a liquid silicon-melt infiltration process on the fabricated one structure.

The step S210 of producing loading portions 110, 210, frictional surfaces 120, 220, and vanes 300 of the disk rotor respectively through separate processes using a carbon fiber reinforced carbon-carbon composite constituting the present invention is a process of preparing a carbon-carbon composite having an outstanding thermal resistance, high-temperature strength, and high-temperature dimensional stability, and then forming the loading portions 110, 210, frictional surfaces 120, 220, and vanes 300 into a predetermined shape that is applied to the disk rotor by machine process.

According to a preferred embodiment, the carbon-carbon composite in the step S210 may be formed by a process, including a step S210-1 of producing a carbon fiber-reinforced polymer (CFRP) that is reinforced by carbon fiber; and a step of S210-2 of producing a carbon-carbon composite by performing a high thermal treatment or densification on the carbon fiber-reinforced polymer.

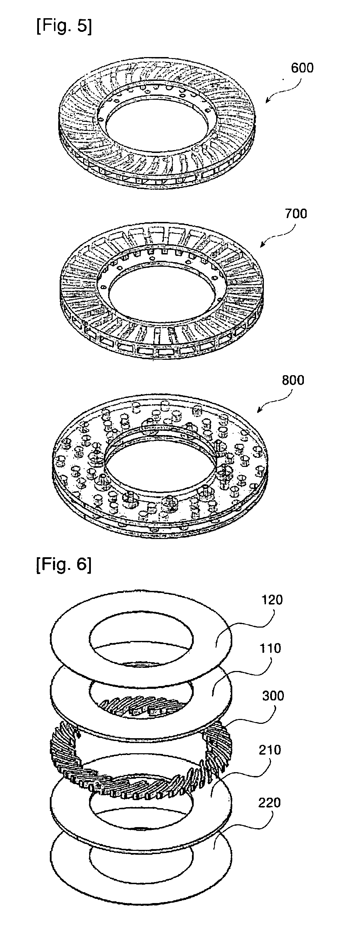

Furthermore, according to a preferred embodiment, a process of forming the loading portions 110, 210, frictional surfaces 120, 220, and vanes 300 into a predetermined shape that is applied to the disk rotor by machine process may be performed in the step S210-2 (the step of producing a carbon-carbon composite). In this embodiment, in the step of producing a carbon-carbon composite (step S210-2) an upper plate 100 (an upper loading portion 110 and an upper frictional surface 120) and a lower plate 200 (a lower loading portion 210 and a lower frictional surface 220) are machine processed into a planar circular disk shape, and a portion of the vanes 300 is also machine processed into a predetermined shape using a carbon-carbon composite similar to the upper plate 100 and lower plate 200. The upper plate 100 and lower plate 200 having a planar circular disk shape have a simple shape, and therefore can be processed in a relatively easy way even though strict processing tolerances are applied. Furthermore, the vanes 300 may be also produced into various shapes according to the characteristic of the required brake using cutting processing devices such as a water-jet. For example as illustrated in FIG. 5, the vanes 300 according to this embodiment could be produced into various shapes, such as a spiral shape 600, a linear shape 700, and a cylindrical pin shape 800 according to the characteristic of the required brake.

The loading portions 110, 210, the vanes 300, and the frictional surfaces 120, 220 according to this embodiment may be formed by a carbon-carbon composite having a same composition ratio, but on the other hand, the loading portions 110, 210 and the vanes 300 may be formed by a carbon-carbon composite having a same composition ratio, and the frictional surfaces 120, 220 may be formed by a carbon-carbon composite having a different composition ratio from the loading portions 110, 210 and the vanes 300.

According to a preferred embodiment, when the loading portions 110, 210, the vanes 300, and the frictional surfaces 120, 220 are formed with a carbon-carbon composite having a same composition ratio, carbon fiber having a length greater than 1 mm may be applied to the loading portions 110, 210, the vanes 300, and the frictional surfaces 120, 220 as a reinforced material. In this case, it is processed such that the density of the carbon-carbon composite for the loading portions 110, 210, the vanes 300, and the frictional surfaces 120, 220 has a value of 1.0-1.7 g/cm³ (before the liquid silicon-melt infiltration process), and the loading portions 110, 210, the vanes 300, and the frictional surfaces 120, 220 after a step S230 of performing the liquid silicon-melt infiltration process on a fabricated disk rotor structure, which will be described later, are synthesized with a composition ratio containing 30-70 wt% of C-component, 2-15 wt% of Si-component, and 35-65 wt% of SiC-component.

According to a preferred embodiment, when the loading portions 110, 210 and the vanes 300are formed with a carbon-carbon composite having a same composition ratio, and the frictional surfaces 120, 220are formed with a carbon-carbon compositehaving a different composition ratio from the loading portions 110, 210 and the vanes 300, carbon fiber having a length greater than 1 mm may be applied to a carbon-carbon composite for the loading portions 110, 210 and the vanes 300 as a reinforced material, and carbon fiber having a length less than 1 mm may be applied to a carbon-carbon composite for the frictional surfaces 120, 220 as a reinforced material. In this case, it may be processed such that the density of the carbon-carbon composite for the loading portions 110, 210 and the vanes 300 before the liquidsilicon-melt infiltration process has a value of 1.0-1.7 g/cm³, and the density of the carbon-carbon composite for the frictional surfaces 120, 220 before the liquid silicon-melt infiltration process has a value of 0.5-1.5 g/cm³ (before the liquid silicon-melt infiltration process), and the frictional surfaces 120, 220 after a step of S230 of performing the liquid silicon-melt infiltration process on a fabricated disk rotor structure, which will be described later, are synthesized with a composition ratio containing 55-99 wt% of SiC-component and 1-45 wt% of C-component, and the loading portions 110, 210 and the vanes 300 are synthesized with a composition ratio containing 30-70 wt% of C-component, 2-15 wt% of Si-component, and 35-65 wt% of SiC-component.

In other words, in case of a ceramic brake disk rotor, frictional surfaces having a different material characteristic from loading portions or vanes may be required, and at this time, it are processed such that carbon fiber having a length greater than 1 mm is applied to a reinforced material of the carbon-carbon composite, and the density of the carbon-carbon composite has a value of 0.5-1.5 g/cm³, and they are synthesized with a composition ratio containing 55-99 wt% of SiC-component and 1-45 wt% of C-component by a liquid silicon-melt infiltration process.Accordingly, the life of the ceramic brake disk rotor can be extended, and the frictional coefficient of the disk rotor at the time of braking is very high, above 0.35.

In the step S210 of producing loading portions 110, 210, frictional surfaces 120, 220, and vanes 300 of the disk rotor respectively through separate processes using a carbon fiber reinforced carbon-carbon composite constituting the present invention, a shape of the vanes 300is separately produced, and therefore internal cooling channels 400 may be formed without any restriction on their shape. In other words, the shape of the vanes 300 for a ceramic brake disk rotor is mostly required to have a shape with various and complicated internal cooling channels to effectively radiate frictional heat created at the time of braking, and in this invention the internal cooling channels 400 of such a ceramic brake disk rotormay be produced into various shapes, such as a spiral shape 600, a linear shape 700, and a chaotic array 800.

The step S220 of fabricating the loading portions 110, 210, frictional surfaces 120, 220, and vanes 300 respectively produced through separate processes into one structure, constituting the present invention, is a process in which the loading portions 110, 210, frictional surfaces 120, 220, and vanes 300 are firmly fixed into one structure.

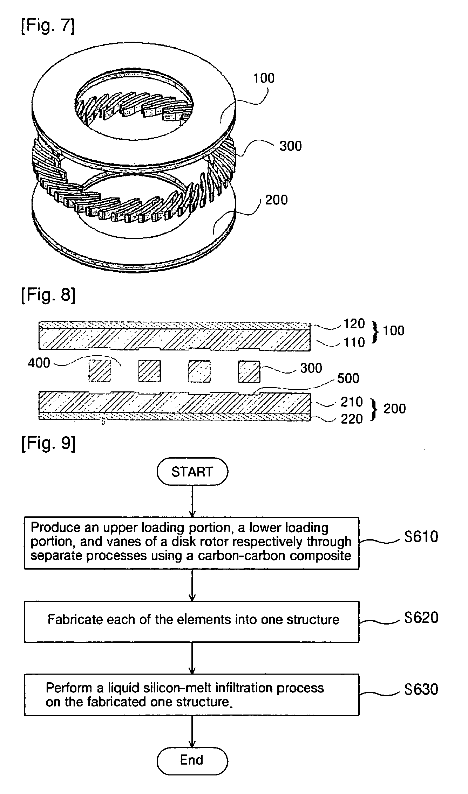

Furthermore, FIGS. 6 and 7 are views for explaining each process of fabricating the loading portions 110, 210, the vanes 300, and the frictional surfaces 120, 220, and FIG. 8 is a cross-sectional view illustrating a state in which grooved portions 500 for inserting vanes between a lower loading portion 210 and an upper loading portion 110 are formed.

Referring to FIGS. 6 and 7, a graphite adhesive is applied to each of the combined interfaces between the loading portions 110, 210, the vanes 300, and the frictional surfaces 120, 220 according to the present invention, thereby firmly fixing each element into one structure.

Furthermore, according to a preferred embodiment, an upper plate 100 (an upper loading portion 110 and an upper frictional surface 120) and a lower plate 200 (a lower loading portion 210and a lower frictional surface 220) may be firmly fixed into one structure by respectively forming grooving portions 500 in which the vanes 300 are inserted into the lower loading portion 210 and the upper loading portion 110 by machine process in advance (refer to FIG. 8), and inserting the vanes 300 into each of the grooving portions 500.

The step S230 of performing a liquid silicon-melt infiltration process on the fabricated one structure, constituting the present invention, is a process in which the shape of each element for thedisk rotor is produced using a carbon-carbon composite in the step S210, and liquid silicon is infiltrated into the pores of the carbon-carbon composite in the disk rotor structure in which the shape of each element is fabricated in the step S220.

Through the process (liquid silicon-melt infiltration) in the step S230, the SiC-component having a larger amount than that of each element itself in the disk rotor is synthesized on the fabricated interface.

Furthermore, through the process (liquid silicon-melt infiltration) in the step S230, a chemical reaction for forming the disk rotor in a completely integrated body is occurred on the fabricated interface between each element of the disk rotor and within each element itself, thereby producing a resultant ceramic brake disk rotor.

According to a preferred embodiment, such a liquid silicon-melt infiltration process(step S230) may be reiteratively performed more than once according to the characteristic of the disk rotor.

### [Second Embodiment]

The method of manufacturing a ceramic brake disk rotor having internal cooling channels according to a second embodiment of the present invention is similar to the configuration of the first embodiment, except that the loading portions 110, 210 of the first embodiment have a function of the frictional surfaces 120, 220 while the frictional surfaces 120, 220 are omitted. Furthermore, in the second embodiment of the invention, the same reference numerals are assigned to the same elements as those in the first embodiment, and their explanation will be omitted.

FIG. 9 is a flowchart for explaining a method of manufacturing a ceramic brake disk rotor having internal cooling channels according to a second embodiment of the present invention.

Referring to FIG. 9, a method of manufacturing a ceramic brake disk rotor having internal cooling channels, according to a second embodiment of the present invention, includes a step S610 of producing an upper loading portion 110, a lower loading portion 210, and vanes 300 respectively through separate processes using a carbon fiber reinforced carbon-carbon composite, a step S620 of fabricating the upper loading portion 110, the lower loading portion 210, and the vanes 300 respectively produced through separate processes into one structure, and a step S630 of performing a liquid silicon-melt infiltration process on the fabricated structure.

The step S610 of producing an upper loading portion 110, a lower loading portion 210, and vanes 300 of thedisk rotor respectively through separate processes using a carbon fiber reinforced carbon-carbon composite constituting the second embodiment of the present invention is a process of preparing a carbon-carbon composite having an outstanding thermal resistance, high-temperature strength, and high-temperature dimensional stability, and then forming the upper/lower loading portions 110, 210 and vanes 300 into a predetermined shape that is applied to the disk rotor by machine process.

According to a preferred embodiment, the carbon-carbon composite in the step S610 may be formed by a process including a step S610-1 of producing a carbon fiber-reinforced polymer (CFRP) that is reinforced by carbon fiber; and a step of S610-2 of producing a carbon-carbon composite by performing a high thermal treatment or densification on the carbon fiber-reinforced polymer.

Furthermore, according to a preferred embodiment, a process of forming the upper/ lower loading portions 110, 210 and vanes 300 into a predetermined shape that is applied to the disk rotor by machine process may be performed in the step S610-2 (the step of producing a carbon-carbon composite). In this embodiment, in the step of producing a carbon-carbon composite (step S610-2) an upper plate 100 (i.e., an upper loading portion 110) and a lower plate 200 (i.e., a lower loading portion 210) are machine processed into a planar circular disk shape, and a portion of the vanes 300 is also machine processed into a predetermined shape using a carbon-carbon composite similar to the upper plate 100 and lower plate 200. The upper plate 100 and lower plate 200having a planar circular disk shape have a simple shape, and therefore can be processed in a relatively easy way even though strict processing tolerances are applied. Furthermore, the vanes 300may be also produced into various shapes according to the characteristic of the required brake using cutting processing devices such as a water-jet. For example, as illustrated in FIG. 5, the vanes 300 could be produced into various shapes, such as a spiral shape 600, a linear shape 700, and a cylindrical pin shape 800 according to the characteristic of the required brake.

According to this embodiment, the upper/lower loading portions 110, 210 and the vanes 300 may be formed by a carbon-carbon composite having a same composition ratio.

According to this embodiment, carbon fiber having a length greater than 1 mm may be applied to the loading portions 110, 210 and the vanes 300 as a reinforced material. In this case, it is processed such that the density of the carbon-carbon composite for the upper/lower loading portions 110, 210 and the vanes 300 has a value of 1.0-1.7 g/cm³ (before the liquid silicon-melt infiltration process), and the upper/lower loading portions 110, 210 and the vanes 300 after a step S630 of performing the liquid silicon-melt infiltration processon a fabricated disk rotor structure, which will be described later, are synthesized with a composition ratio containing 30-70 wt% of C-component, 2-15 wt% of Si-component, and 35-65 wt% of SiC-component.

According to this embodiment, In the step S610 of producing upper/lower loading portions 110, 210 and vanes 300 of the disk rotor respectively through separate processes using a carbon fiber reinforced carbon-carbon composite, a shape of the vanes 300is separately produced, and therefore internal cooling channels 400 may be formed without any restriction on their shape. In other words, the shape of the vanes 300 for a ceramic brake disk rotor is mostly required to have a shape with various and complicated internal cooling channels 400 to effectively radiate frictional heat created at the time of braking, and in this invention the internal cooling channels 400 of such a ceramic brake disk rotormay be produced into various shapes, such as a spiral shape 600, a linear shape 700, and a chaotic array 800 (Refer to FIG. 5).

According to this embodiment, the step S620 of fabricating the upper/lower loading portions 110, 210 and vanes 300 respectively produced through separate processes into one structure is a process in which the upper/lower loading portions 110, 210 and vanes 300 are firmly fixed into one structure.

A graphite adhesive is applied to each of the combined interfaces between the upper/ lower loading portions 110, 210 and the vanes 300 according to the present invention, thereby firmly fixing each element into one structure.

Furthermore, according to a preferred embodiment, an upper plate 100 (i.e., an upper loading portion 110) and a lower plate 200 (i.e., a lower loading portion 210) may be firmly fixed into one structure by respectively forming grooving portions 500 in which the vanes 300 are inserted into the lower loading portion 210 and the upper loading portion 110 by machine process in advance (refer to FIG. 8), and inserting the vanes 300 into each of the grooving portions 500.

The step S630 of performing a liquid silicon-melt infiltration process on the fabricated one structure, constituting the present invention, is a process in which the shape of each element for the disk rotor is produced using a carbon-carbon composite in the step S610, and liquid silicon is infiltrated into the pores of the carbon-carbon composite in the disk rotor structure in which the shape of each element is fabricated in the step S620.

Through the process (liquid silicon-melt infiltration) in the step S630, the SiC-component having a larger amount than within each element itself (carbon-carbon composite) in the disk rotor is synthesized on the fabricated interface.

Furthermore, through the process (liquid silicon-melt infiltration) in the step S630, a chemical reaction for forming the disk rotor in a completely integrated body is occurred on the fabricated interface between each element of the disk rotor and within each element, thereby producing a resultant ceramic brake disk rotor.

According to a preferred embodiment, such a liquid silicon-melt infiltration process(step S630) may be reiteratively performed more than once according to the characteristic of the disk rotor.

While in the foregoing, a technical idea of the present invention has been described by way of a few exemplary embodiments, it will be apparent to those skilled in the art that various modifications and variations can be made without departing from the essential characteristicof the invention. Therefore, it is understood that the embodiments of the invention are disclosed not to limit but to describe the technical idea of the present invention, and the scope of the technical idea of the present invention is not limited by those embodiments. The protected scope of the invention shall be defined by the appended claims, and all the technical ideas within the equivalent scope of the invention shall fall within the scope of the right of the invention.

## Claims

1. A method of manufacturing a ceramic brake disk rotor having internal cooling channels, comprising the steps of:
(a) producing (S210) loading portions (110, 210), frictional surfaces (120, 220), and vanes (300) of the disk rotor respectively through separate processes using a carbon fiber reinforced carbon-carbon composite
(b) fabricating (S220) the loading portions (110, 210), frictional surfaces (120, 220), and vanes (300) respectively produced through separate processes into one structure and
(c) performing (S230) a liquid silicon-melt infiltration process on the fabricated one structure.

2. The method of manufacturing a ceramic brake disk rotor having internal cooling channels as set forth in claim 1, wherein the carbon-carbon composite in the step (a) is formed by a process, including the steps of:
(al) producing a carbon fiber-reinforced polymer (CFRP) that is reinforced by carbon fiber; and
(a2) producing a carbon-carbon composite by performing a high thermal treatment or densification on the carbon fiber-reinforced polymer.

3. The method of manufacturing a ceramic brake disk rotor as set forth in claim 2, wherein the loading portions (110, 210), the vanes (300), and the frictional surfaces (120, 220) are formed by a carbon-carbon composite having a same composition ratio.

4. The method of manufacturing a ceramic brake disk rotor as set forth in claim 2, wherein the loading portions (110, 210) and the vanes (300) are formed by a carbon- carbon composite having a same composition ratio, and the frictional surfaces (120, 220) are formed by a carbon-carbon composite having a different composition ratio from the loading portions (110, 210) and the vanes (300).

5. The method of manufacturing a ceramic brake disk rotor as set forth in claim 3, wherein carbon fiber having a length greater than 1 mm is applied to the loading portions (110, 210), the vanes (300), and the frictional surfaces (120, 220) as a reinforced material, and the loading portions (110, 210), the vanes (300), and the frictional surfaces (120, 220) after performing the liquid silicon-melt infiltration process are synthesized with a composition ratio containing 30-70 wt% of C-component, 2-15 wt% of Si- component, and 35-65 wt% of SiC-component.

6. The method of manufacturing a ceramic brake disk rotor as set forth in claim 4, wherein carbon fiber having a length greater than 1 mm is applied to a carbon-carbon composite for the loading portions (110, 210) and the vanes (300) as a reinforced material, and carbon fiber having a length less than 1 mm is applied to a carbon-carbon composite for the frictional surfaces (120, 220) as a reinforced material, the frictional surfaces (120, 220) after performing the liquid silicon-melt infiltration process are synthesized with a composition ratio containing 55-99 wt% of SiC- component and 1-45 wt% of C-component, and the loading portions (110, 210) and the vanes (300) after performing the liquid silicon-melt infiltration process are synthesized with a composition ratio containing 30-70 wt% of C-component, 2-15 wt% of Si-component, and 35-65 wt% of SiC-component.

7. The method of manufacturing a ceramic brake disk rotor as set forth in claim 1, wherein the shape of the vanes (300) are produced by any one of a spiral shape, a linear shape, and a pin shape.

8. The method of manufacturing a ceramic brake disk rotor as set forth in claim 3, wherein the density of the carbon-carbon composite for the loading portions (110, 210), the vanes (300), and the frictional surfaces (120, 220) before the liquid silicon- melt infiltration process has a value of 1.0-1.7 g/cm<3>.

9. The method of manufacturing a ceramic brake disk rotor as set forth in claim 4, wherein thedensity of the carbon-carbon composite for the loading portions (110, 210) and the vanes (300) before the liquid silicon-melt infiltration process has a value of 1.0-1.7 g/cm<3>, and the density of the carbon-carbon composite for the frictional surfaces (120, 220) before the liquid silicon-melt infiltration process has a value of 0.5-1.5 g/cm<3>.

10. The method of manufacturing a ceramic brake disk rotor as set forth in claim 4, wherein an upper plate (100) and a lower plate (200) is fabricated by respectively applying a graphite adhesive between an upper loading portion (110) and an upper frictional surface (120), and between a lower loading portion (210) and a lower frictional surface (220), and then vanes (300) are finally fabricated into the respectively fabricated upper plate (100) and lower plate (200).

11. The method of manufacturing a ceramic brake disk rotor as set forth in claim 10, wherein it is finally fabricated by respectively forming grooving portions (500) in which the vanes (300) are inserted into the upper loading portion 110 and the lower loading portion (210) in advance, and inserting the vanes (300) into each of the grooving portions (500).

12. The method of manufacturing a ceramic brake disk rotor as set forth in claim 1, wherein the disk rotor is fabricated as a completely integrated body by performing the liquid silicon-melt infiltration process on the fabricated one structure, and through a chemical reaction on the fabricated interface and within the carbon-carbon composite.

13. The method of manufacturing a ceramic brake disk rotor as set forth in claim 12, wherein a SiC-component having a larger amount than that within the carbon- carbon composite is synthesized on the fabricated interface by the liquid silicon- melt infiltration process.

## Patentansprüche

1. Verfahren zum Herstellen eines keramischen Bremsscheibenrotors mit inneren Kühlkanälen, wobei das Verfahren folgende Schritte umfasst:
(a) Erzeugen (S210) von Lastteilen (110, 210), Reibungsflächen (120, 220) und Flügeln (300) des Scheibenrotors jeweils durch separate Prozesse unter Verwendung eines kohlenstofffaserverstärkten Kohlenstoff-Kohlenstoff-Verbundwerkstoffs,
(b) Verbinden (S220) der jeweils durch separate Prozesse erzeugten Lastteile (110, 210), Reibungsflächen (120, 220) und Flügel (300) zu einem Aufbau, und
(c) Durchführen (S320) eines Flüssigsiliciumschmelze-Infiltrationsprozesses auf dem verbundenen Aufbau.

2. Verfahren zum Herstellen eines keramischen Bremsscheibenrotors mit internen Kühlkanälen nach Anspruch 1, wobei der Kohlenstoff-Kohlenstoff-Verbundwerkstoff in dem Schritt (a) durch einen Prozess ausgebildet wird, der die folgenden Schritte umfasst:
(a1) Erzeugen eines kohlenstofffaserverstärkten Polymers (CFRP), das durch Kohlenstofffasern verstärkt ist, und
(a2) Erzeugen eines Kohlenstoff-Kohlenstoff-Verbundwerkstoffs durch das Durchführen einer hohen Wärmebehandlung oder einer Verdichtung auf dem kohlenstofffaserverstärkten Polymer.

3. Verfahren zum Herstellen eines keramischen Bremsscheibenrotors nach Anspruch 2, wobei die Lastteile (110, 210), die Flügel (300) und die Reibungsflächen (120, 220) aus einem Kohlenstoff-Kohlenstoff-Verbundwerkstoff mit einem gleichen Zusammensetzungsverhältnis ausgebildet werden.

4. Verfahren zum Herstellen eines keramischen Bremsscheibenrotors nach Anspruch 2, wobei die Lastteile (110, 210) und die Flügel (300) aus einem Kohlenstoff-Kohlenstoff-Verbundwerkstoff mit einem gleichen Zusammensetzungsverhältnis ausgebildet werden und die Reibungsflächen (120, 220) aus einem Kohlenstoff-Kohlenstoff-Verbundwerkstoff mit einem anderen Zusammensetzungsverhältnis als die Lastteile (110, 210) und die Flügel (300) ausgebildet werden.

5. Verfahren zum Herstellen eines keramischen Bremsscheibenrotors nach Anspruch 3, wobei Kohlenstofffasern mit einer Länge von mehr als 1 mm auf die Lastteile (110, 210), die Flügel (300) und die Reibungsflächen (120, 220) als ein verstärktes Material angewendet werden, wobei die Lastteile (110, 210), die Flügel (300) und die Reibungsflächen (120, 220) nach dem Durchführen des Flüssigsiliciumschmelze-Infiltrationsprozesses mit einem Zusammensetzungsverhältnis von 30-70 Gewichtsprozent einer C-Komponente, 2-15 Gewichtsprozent einer Si-Komponente und 35-65 Gewichtsprozent einer SiC-Komponente synthetisiert werden.

6. Verfahren zum Herstellen eines keramischen Bremsscheibenrotors nach Anspruch 4, wobei Kohlenstofffasern mit einer Länge von mehr als 1 mm auf einen Kohlenstoff-Kohlenstoff-Verbundwerkstoff für die Lastteile (110, 210) und die Flügel (300) als ein verstärktes Material angewendet werden und Kohlenstofffasern mit einer Länge von weniger als 1 mm auf einen Kohlenstoff-Kohlenstoff-Verbundwerkstoff für die Reibungsflächen (120, 220) als ein verstärktes Material angewendet werden, wobei die Reibungsflächen (120, 220) nach dem Durchführen des Flüssigsiliciumschmelze-Infiltrationsprozesses mit einem Zusammensetzungsverhältnis von 55-99 Gewichtsprozent einer SiC-Komponente und 1-45 Gewichtsprozent einer C-Komponente synthetisiert werden und die Lastteile (110, 210) und die Flügel (300) nach dem Durchführen des Flüssigsiliciumschmelze-Infiltrationsprozesses mit einem Zusammensetzungsverhältnis von 30-70 Gewichtsprozent einer C-Komponente, 2-15 Gewichtsprozent einer Si-Komponente und 36-65 Gewichtsprozent einer SiC-Komponente synthetisiert werden.

7. Verfahren zum Herstellen eines keramischen Bremsscheibenrotors nach Anspruch 1, wobei eine spiralförmige, linienförmige oder nadelförmige Form der Flügel (300) erzeugt wird.

8. Verfahren zum Herstellen eines keramischen Bremsscheibenrotors nach Anspruch 3, wobei die Dichte des Kohlenstoff-Kohlenstoff-Verbundwerkstoffs für die Lastteile (110, 210), die Flügel (300) und die Reibungsflächen (120, 220) vor dem Flüssigsiliciumschmelze-Infiltrationsprozess einen Wert von 1,0-1,7 g/cm³ aufweist.

9. Verfahren zum Herstellen eines keramischen Bremsscheibenrotors nach Anspruch 4, wobei die Dichte des Kohlenstoff-Kohlenstoff-Verbundwerkstoffs für die Lastteile (110, 210) und die Flügel (300) vor dem Flüssigsiliciumschmelze-Infiltrationsprozess einen Wert von 1,0-1,7 g/cm³ aufweist und die Dichte des Kohlenstoff-Kohlenstoff-Verbundwerkstoffs für die Reibungsflächen (120, 220) vor dem Flüssigsiliciumschmelze-Infiltrationsprozess einen Wert von 0,5-1,5 g/cm³ aufweist.

10. Verfahren zum Herstellen eines keramischen Bremsscheibenrotors nach Anspruch 4, wobei eine obere Platte (100) und eine untere Platte (200) jeweils durch das Anwenden eines Graphitklebers zwischen einem oberen Lastteil (110) und einer oberen Reibungsfläche (120) und zwischen einem unteren Lastteil (210) und einer unteren Reibungsfläche (220) hergestellt werden, wobei dann Flügel (300) in der hergestellten oberen Platte (100) und in der hergestellten unteren Platte (200) ausgebildet werden.

11. Verfahren zum Herstellen eines keramischen Bremsscheibenrotors nach Anspruch 10, wobei der keramische Bremsscheibenrotor fertiggestellt wird, indem jeweils Vertiefungsteile (500) für das Einstecken der Flügel (300) in dem oberen Lastteil (110) und in dem unteren Lastteil (210) ausgebildet werden und dann die Flügel (300) in die Vertiefungsteile (500) eingesteckt werden.

12. Verfahren zum Herstellen eines keramischen Bremsscheibenrotors nach Anspruch 1, wobei der Bremsscheibenrotor als ein vollständig integrierter Körper durch das Durchführen des Flüssigsiliciumschmelze-Infiltrationsprozesses auf dem verbundenen Aufbau und durch eine chemische Reaktion auf der hergestellten Grenzfläche und in dem Kohlenstoff-Kohlenstoff-Verbundwerkstoff hergestellt wird.

13. Verfahren zum Herstellen eines keramischen Bremsscheibenrotors nach Anspruch 12, wobei eine SiC-Komponente mit einer größeren Menge als in dem Kohlenstoff-Kohlenstoff-Verbundwerkstoff an der hergestellten Grenzfläche durch den Flüssigsiliciumschmelze-Infiltrationsprozess synthetisiert wird.

## Revendications

1. Procédé de fabrication de rotor de disque de frein en céramique avec canaux de refroidissement internes, comprenant les étapes consistant à :
a) produire (S210) des parties de mise en charge (110, 210), des surfaces de friction (120, 220) et des ailettes (300) du rotor de disque respectivement par des opérations séparées utilisant un composite de carbone-carbone renforcé aux fibres de carbone ;
b) fabriquer (S220) les parties de mise en charge (110, 210), les surfaces de friction (120, 220) et les ailettes (300) respectivement produites par des opérations séparées en une structure ; et
c) effectuer (S230) une opération d'infiltration de silicium fondu liquide sur la structure fabriquée.

2. Procédé de fabrication de rotor de disque de frein en céramique avec canaux de refroidissement internes selon la revendication 1, pour lequel le composite de carbone-carbone à l'étape a) est formé par un procédé comprenant les étapes consistant à :
A1) produire un polymère renforcé aux fibres de carbone (CFRP) qui est renforcé par des fibres de carbone ; et
a2) produire un composite de carbone-carbone en effectuant un traitement thermique à haute température ou une densification sur le polymère renforcé aux fibres de carbone.

3. Procédé de fabrication de rotor de disque de frein en céramique selon la revendication 2, pour lequel les parties de mise en charge (110, 210), les ailettes (300) et les surfaces de friction (120, 220) sont formées par un composite de carbone-carbone ayant un même rapport de composition.

4. Procédé de fabrication de rotor de disque de frein en céramique selon la revendication 2, pour lequel les parties de mise en charge (110, 210) et les ailettes (300) sont formées par un composite de carbone-carbone ayant un même rapport de composition et les surfaces de friction (120, 220) sont formées par un composite de carbone-carbone ayant un rapport de composition différent de celui des parties de mise en charge (110, 210) et des ailettes (300).

5. Procédé de fabrication de rotor de disque de frein en céramique selon la revendication 3, pour lequel des fibres de carbone ayant une longueur supérieure à 1 mm sont appliquées aux parties de mise en charge (110, 210), aux ailettes (300) et aux surfaces de friction (120, 220) comme matériau renforcé et les parties de mise en charge (110, 210), les ailettes (300) et les surfaces de friction (120, 220) après avoir effectué l'opération d'infiltration de silicium fondu liquide sont synthétisées avec un rapport de composition représentant 30 à 70 % en masse de composant C, 2 à 15 % en masse de composant Si et 35 à 65 % en masse de composant SiC.

6. Procédé de fabrication de rotor de disque de frein en céramique selon la revendication 4, pour lequel des fibres de carbone ayant une longueur supérieure à 1 mm sont appliquées à un composite de carbone-carbone pour les parties de mise en charge (110, 210) et les ailettes (300) comme matériau renforcé et des fibres de carbone ayant une longueur inférieure à 1 mm sont appliquées à un composite de carbone-carbone pour les surfaces de friction (120, 220) comme matériau renforcé, les surfaces de friction (120, 220) après avoir effectué l'opération d'infiltration de silicium fondu liquide sont synthétisées avec un rapport de composition représentant 55 à 99 % en masse de composant SiC et 1 à 5 % en masse de composant C et les parties de mise en charge (110, 210) et les ailettes (300) après avoir effectué l'opération d'infiltration de silicium fondu liquide sont synthétisées avec un rapport de composition représentant 30 à 70 % en masse de composant C, 2 à 15 % en masse de composant Si et 35 à 65 % en masse de composant SiC.

7. Procédé de fabrication de rotor de disque de frein en céramique selon la revendication 1, pour lequel la forme des ailettes (300) est produite par n'importe quelle forme en spirale, linéaire ou en aiguille.

8. Procédé de fabrication de rotor de disque de frein en céramique selon la revendication 3, pour lequel la densité du composite de carbone-carbone pour les parties de mise en charge (110, 210), les ailettes (300) et les surfaces de friction (120, 220) avant l'opération d'infiltration de silicium fondu liquide a une valeur de 1,0 à 1,7 g/cm³.

9. Procédé de fabrication de rotor de disque de frein en céramique selon la revendication 4, pour lequel la densité du composite de carbone-carbone pour les parties de mise en charge (110, 210) et les ailettes (300) avant l'opération d'infiltration de silicium fondu liquide a une valeur de 1,0 à 1,7 g/cm³ et la densité du composite de carbone-carbone pour les surfaces de friction (120, 220) avant l'opération d'infiltration de silicium fondu liquide a une valeur de 0,5 à 1,5 g/cm³.

10. Procédé de fabrication de rotor de disque de frein en céramique selon la revendication 4, pour lequel une plaque supérieure (100) et une plaque inférieure (200) sont fabriquées respectivement en appliquant un adhésif au graphite entre une partie de mise en charge supérieure (110) et une surface de friction supérieure (120) et entre une partie de mise en charge inférieure (210) et une surface de friction inférieure (220), puis les ailettes sont finalement fabriquées respectivement en la plaque supérieure (100) et la plaque inférieure (200) fabriquées.

11. Procédé de fabrication de rotor de disque de frein en céramique selon la revendication 4, pour lequel il est finalement fabriqué respectivement en formant des parties de rainurage (500) dans lesquelles les ailettes (300) sont insérées dans la partie de mise en charge supérieure (110) et la partie de mise en charge inférieure (210) à l'avance, puis insérer les ailettes (300) dans chacune des parties de rainurage (500).

12. Procédé de fabrication de rotor de disque de frein en céramique selon la revendication 1, pour lequel le rotor de disque est fabriqué comme un corps complètement intégré en effectuant l'opération d'infiltration de silicium fondu liquide sur la structure fabriquée et par une réaction chimique sur l'interface fabriquée et dans le composite de carbone-carbone.

13. Procédé de fabrication de rotor de disque de frein en céramique selon la revendication 12, pour lequel un composant SiC en une plus grande quantité que celle dans le composite de carbone-carbone est synthétisé sur l'interface fabriquée par l'opération d'infiltration de silicium fondu liquide.
